(19) Europäisches Patentamt
European Patent Office
Office européen des brevets

(11) **EP 3 774 022 B1**

(12) **EUROPEAN PATENT SPECIFICATION**

(45) Date of publication and mention
of the grant of the patent:
**12.04.2023 Bulletin 2023/15**

(21) Application number: **19714297.9**

(22) Date of filing: **26.03.2019**

(51) International Patent Classification (IPC):
**B01J 19/18** (2006.01)     **B01J 19/24** (2006.01)
**B01J 19/00** (2006.01)     **C08F 10/00** (2006.01)

(52) Cooperative Patent Classification (CPC):
(C-Sets available)
**B01J 19/0033; B01J 19/0006; C08F 210/16;**
B01J 2219/00173; B01J 2219/00186;
B01J 2219/00202; C08F 4/65908; C08F 4/65912

(Cont.)

(86) International application number:
**PCT/US2019/024051**

(87) International publication number:
**WO 2019/191078 (03.10.2019 Gazette 2019/40)**

(54) **METHOD TO MONITOR AND CONTROL THE POLYMERIZATION OF A POLYMER**

VERFAHREN ZUR ÜBERWACHUNG UND STEUERUNG DER POLYMERISATION EINES
POLYMERS

PROCÉDÉ DE SURVEILLANCE ET DE CONTRÔLE DE LA POLYMÉRISATION D'UN POLYMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2018 PCT/US2018/024718**

(43) Date of publication of application:
**17.02.2021 Bulletin 2021/07**

(73) Proprietor: **Dow Global Technologies LLC
Midland, MI 48674 (US)**

(72) Inventors:
• **CHAUVEL, Jean P., Jr.**
**Lake Jackson, Texas 77566 (US)**
• **SEASHOLTZ, Mary Beth**
**Midland, Michigan 48674 (US)**
• **DENTON, David P.**
**San Marcos, Texas 78666 (US)**
• **KIRSCH, Barbara A.**
**Wilmington, Delaware 19810 (US)**

(74) Representative: **Boult Wade Tennant LLP
Salisbury Square House
8 Salisbury Square
London EC4Y 8AP (GB)**

(56) References cited:
**WO-A1-98/29787      WO-A1-2012/045597
WO-A2-2009/020540   US-A1- 2005 154 129
US-B1- 6 635 224**

(52) Cooperative Patent Classification (CPC): (Cont.)

C-Sets
**C08F 210/16, C08F 2/001;**
**C08F 210/16, C08F 2/01;**
**C08F 210/16, C08F 4/64193;**
C08F 210/16, C08F 210/14, C08F 2500/03,
C08F 2500/08, C08F 2500/12

**Description**

BACKGROUND OF THE INVENTION

There is a need for an improved on-line spectroscopic analysis that can be used to reduce polymer off-grade during a solution polymerization process, and, in particular, a solution polymerization to form an olefin-based polymer. Conventional analyses typically require an off-line measurement of polymer or polymer sample, and/or do not provide the degree of accuracy needed to improve the production of targeted polymer, and to reduce off-grade production.

U.S. Patent 5,151,474 describes the use of high resolution, multi-wavelength spectroscopy, using a probe only in the reactor feed stream, post addition of the monomer or comonomer, to control either (1) the addition rate of monomer into the stream of recycled solvent, (2) the rate of addition of the comonomer into the recycled solvent stream, (3) the ratio of comonomer concentration to combined concentration of monomer and comonomer, or combinations. Applied Spectroscopy, (1997), 51(10), 1565-1572, describes the real-time analysis of mixtures of ethylene and octene in ISOPAR E solvent. The ethylene and octene concentrations predicted by model based on a set of calibration spectra collected that cover a range of concentration, pressure, and temperatures of interest. M.B. Seasholtz, Making Money with Chemometrics, 1997, describes the use of chemometric methods for NIR spectroscopy in chemical applications.

WO-A-98/29787 relates to a process plant for the manufacture of halobutyl rubber which provides online monitoring and control of the process parameters to control the properties of the product. It incorporates an in situ measurement system that does not require the removal of any sample material from the process. It uses a Fourier Transform Near Infrared (FTNIR) spectrometer, fiber-optic cables, a viscometer for measuring solution viscosity and a Resistance Temperature Device (RTD) for temperature measurement. An online real-time analyzer system using a Constrained Principal Spectral Analysis program predicts the property of the polymer product and provides the process_control system with analysis of the data using derived relationships between the physical properties of the polymer and these spectral measurements and the measured values of fluid viscosity and temperature. Differences between the predicted and desired property of the product are used to control process parameters. The method can be used for a variety of chemical process plants.

The use of online or in-situ spectroscopy to monitor polymerization processes is also described in the following: (1) "On-Line Monitoring of Chemical Reactions," Wolf-Dieter Hergeth, Ullmann's Encyclopedia of Industrial Chemistry, 2012, Wiley-VCH Verlag GmbH & Co., and (2) Process Analytical Technology: Spectroscopic Tools and Implementation Strategies for the Chemical and Pharmaceutical Industries, 2nd edition, ed. Katherine A. Bakeev, John Wiley & Sons, 2010. See also the following references: US 6723804, US7400941, US7315369, US7417095, US7433761, US 7751941, US 6723804, US 6864331, US 7505127, US 7505129, US 7483129, US 7106437, US7116414, US 6479597, EP 1214363, EP 2244461, US 6072576, US 8843324, US 5155184, US 20060116835.

However, there remains a need for an improved on-line spectroscopic analysis during a solution polymerization process, to reduce polymer off-grade. There is a further need for such an analysis that includes an on-line polymer analysis, and does not require an off-line measurement of the polymer. These needs have been met by the following invention.

SUMMARY OF INVENTION

In a first aspect, a process is provided to obtain a real-time measurement of a monomer concentration and/or a real-time measurement of a comonomer concentration according to claim 1.

In a second aspect, a solution polymerization process is provided, to form a polymer, said process being according to claim 8.

In a third aspect, a polymerization apparatus is provided, according to claim 10.

BRIEF DESCRIPTION OF THE DRAWINGS

Figure 1 depicts a flow diagram of a solution polymerization process.
Figures 2A and 2B each depicts a schematic a FTNIR probe and densitometer, in a series configuration, located after the "reaction box" of Figure 1. Figure 2C depicts a schematic a FTNIR probe and densitometer in a parallel configuration, located after the "reaction box" of Figure 1.
Figure 3 depicts an "intensity versus wavelength (cm$^{-1}$)" profile for a solution polymerization of an ethylene/octene copolymer (Upper Blue Trace - Exit; Lower Green Trace - Recycled Solvent).
Figure 4 depicts monomer, comonomer, solvent and hydrogen flows to two reactors in series.
Figure 5 and Figure 6 depict process data (including FTNIR predicted concentrations) collected in real time during a polymerization campaign.

DETAILED DESCRIPTION

A new process for obtaining real-time measurement(s) of the monomer and comonomer concentration in process streams of a solution polymerization, both before and after a reactor(s), has been developed, using on-line spectroscopic probes, such as on-line FTNIR probes. The measured concentrations are used to determine reactor monomer/comonomer conversion, and are used to make adjustments in feed rates (monomer/comonomer/solvent/catalyst) into the reactor, to minimize off-grade polymer, during product transitions, and to ensure that the polymer produced meets the targeted quality attributes, by maintaining tight and consistent control of the reactor(s) during the polymerization process.

The process, in particular, employs an FTNIR spectrometer, coupled with fiber optic probes, in multiple locations, for example, either the reactor feed and exit streams, or alternatively, the solvent recycle and exit streams. The optical fibers carry light to and from the sample points, and the amount of light absorbed by the sample is monitored. It has been discovered that by measuring concentrations, at locations, both before, and after, the reactor(s), the reactor(s) conversion(s) can be calculated, and compared to set point(s) in a process control computer system, and, as needed, reactor conditions (e.g., catalyst flow or catalyst ratio), adjusted using an automatic computer based control (PID).

It has been discovered that the process can be used to monitor the polymerization of various types of polymers, including olefin-based polymers, such as ethylene-based polymers (e.g., polymers comprised of ≥ 50wt% ethylene monomer and the following comonomers - propylene, 1-butene, 1-hexene, 1-octene; EPDM; ESI (ethylene styrene interpolymer)); and propylene-based polymers (i.e., propylene homopolymers and propylene/ethylene copolymers). Such polymers can be produced in a variety of hydrocarbon solvents (i.e., ISPOPAR E, SASOL, PETROSOL, and SHELL). In one embodiment, the process is used to monitor the polymerization of an EPDM. In a further embodiment, the diene is 5-ethylidene-2-norbornene (ENB).

Samples for modeling, with known concentrations of monomer, comonomer, solvent, and polymer (exit stream only) can be prepared, either in a small scale pilot plant, or in an apparatus known as the "Viscorig" (Solution Viscosity Test Unit). FTNIR spectra can be acquired over the concentration, temperature, and pressure ranges of interest. Chemometric models are then developed, with different techniques applied, depending on the process stream - PLS (Partial Least Squares) for the recycle solvent and reactor feed streams, and CLS (Classical Least Squares) for the reactor exit stream. The spectra are first preprocessed to eliminate a baseline shift, as needed, for example, by subtracting the baseline absorption in a wavelength region outside the range used for the models (7668 $cm^{-1}$ for polyethylene models 7650 $cm^{-1}$ for EPDM and ESI). Monitoring this "baseline" absorption can also be used to indicate probe fouling or other triggers for maintenance.

Additionally, the monomer and comonomer concentration can also be measured by on-line gas chromatograph (GC) in the recycle vent stream, and this information can be used to correct the exit stream FTNIR results. This is necessary, because the location of the exit stream FTNIR probe is before the catalyst kill addition point. The GC data cannot be used in real time control of the reactor, however, due to excessive delay time (approx. 20 min).

It has been discovered that including a polymer term in the regression models for the exit stream is important to achieve the expected model performance. Thus, the conventional comonomer predictions were too high, without the polymer term included in the calibration samples. In terms of process control, the calculated concentrations can be used to control the exit stream monomer/comonomer concentration and the reactor monomer/comonomer conversion.

As discussed above, in a first aspect, a process is provided to obtain a real-time measurement of a monomer concentration and/or a real-time measurement of a comonomer concentration, in at least one process stream of a solution polymerization to form a polymer, said process comprising analyzing the amount of the monomer and/or the comonomer, in a polymer solution downstream from the exit of at least one reactor, using at least one fiber optic sensor coupled to a light source (for example, a laser), or using at least one flow cell coupled to a light source, and wherein the light source is connected to a spectrometer; and wherein at least one of the following takes place:

A) a portion of the polymer solution exits the reactor, and then comes into contact with the fiber optic sensor or the flow cell, and a spectrum is generated, and then the solution flows through a densitometer,; or

B) a portion of the polymer solution exits the reactor, flows through a densitometer, and then the solution comes into contact with the fiber optic sensor or the flow cell, and a spectrum is generated; or

C) a portion of the polymer solution exits the reactor, and is split onto at least two streams, and wherein one stream flows through a densitometer, and wherein another stream comes into contact with the fiber optic sensor or flow cell, and a spectrum is generated.

In one embodiment, step A) takes place. In one embodiment, step B) takes place. In one embodiment, step C) takes place.

In a second aspect, a solution polymerization process is provided, to form a polymer, said process comprising at least the following steps:

> a) feeding monomer, solvent, and optionally comonomer(s) to at least one reactor;
> b) dissolving monomer, and optional comonomer(s), in the solvent, to form a solution;
> c) polymerizing the monomer and/or the comonomer to form the polymer; and

wherein a real-time measurement of the monomer concentration, and optionally, a real-time measurement of the comonomer concentration, in at least one process stream of the polymerization, is obtained using the process of one or more processes of the first aspect.

In a third aspect, a polymerization apparatus is provided, comprising at least the following:

> i) at least one reactor;
> ii) at least one fiber optic sensor coupled to a light source, or at least one flow cell coupled to a light source;
> iii) at least one densitometer;
> iv) at least one spectrometer; and

wherein a portion of the polymer solution exits the reactor, comes into contact with the fiber optic sensor or the flow cell, and a spectrum is generated, and then the solution flows through a densitometer; or

wherein a portion of the polymer solution exits the reactor, flows through a densitometer, and then the solution comes into contact with the fiber optic sensor or the flow cell, and a spectrum is generated; or

wherein a portion of the polymer solution exits the reactor, and is split onto at least two streams, and wherein one stream flows through a densitometer, and wherein another stream comes into contact with the fiber optic sensor or flow cell, and a spectrum is generated.

The process of the first aspect may comprise one or more embodiments described herein. The polymerization of the second aspect may comprise one or more embodiments described herein. The apparatus of the third aspect may comprise one or more embodiments described herein.

The following embodiments apply to each of the first, second and third aspects, described herein, as applicable.

For the fiber optic sensor coupled to a light source, the fiber optic sensor (including the probe) is on-line with the reactor; and a remote light source, and such a set-up can also be used for an analysis of the content a side stream from, or to, the reactor (probe inserted into the reactor or into the side stream). A probe can also be inserted into the reactor. In specific embodiments, the optical fibers are kept at a constant temperature.

For the flow cell coupled to a light source, the flow cell is on-line with the reactor; and a remote light source, and such a set-up can also be used for an analysis of the content a side stream from, or to, the reactor (the flow cell connected to the side stream).

In one embodiment, or a combination of embodiments described herein, the "polymer solution downstream from the exit of at least one reactor," which is analyzed, comprises from 10 to 50 wt% of the polymer, based on the weight of the polymer solution.

In one embodiment, or a combination of embodiments described herein, the densitometer is upstream from a separator.

In one embodiment, the fiber optic sensor or the flow cell is upstream from the separator.

In one embodiment, or a combination of embodiments described herein, the analysis of "the amount of monomer and/or comonomer in the polymer solution, downstream from the exit of the at least one reactor" is performed using an equipment that comprises a spectrometer selected from an FTIR spectrometer or an FTNIR spectrometer. In a further embodiment, the spectrometer selected from an FTIR spectrometer, an FTNIR spectrometer, and further an FTNIR spectrometer.

In one embodiment, or a combination of embodiments described herein, the process further comprises analyzing the amount of a monomer and/or the amount of a comonomer in a process stream upstream from the entrance into the at least one reactor, using at least one fiber optic sensor coupled to a light source, or using at least one flow cell coupled to a light source; and wherein "the amount of the monomer and/or the amount of the comonomer" in this process stream derives from fresh monomer and/or fresh comonomer, respectively, and optionally derives from recycled monomer and/or recycled comonomer, respectively. In a further embodiment, the analysis of "the amount of monomer and/or the amount of the comonomer in this process stream is performed using an equipment that comprises a spectrometer selected from an FTIR spectrometer or an FTNIR spectrometer. In a further embodiment, the spectrometer selected from an FTIR spectrometer, an FTNIR spectrometer, and further an FTNIR spectrometer.

In one embodiment, or a combination of embodiments described herein, the same type of spectrometer is used in the analysis of "the amount of the monomer and/or the amount of the comonomer" in the polymer solution downstream from the exit of the at least one reactor" and the analysis of the "the amount of monomer and/or the amount of the comonomer" in the process stream upstream from the entrance into the at least one reactor.

The process further comprises analyzing "the amount of the monomer and/or the amount of the comonomer" in a recycled solvent stream, using at least one fiber optic sensor coupled to a light source, or using at least one flow cell coupled to a light source; and wherein this recycled solvent stream is downstream from a "solvent/monomer separator" and upstream from the injection of the monomer and/or the comonomer into a process stream fed to the at least one reactor. In a further embodiment, the analysis of "the amount of the monomer and/or the amount of the comonomer" in the recycled solvent stream is performed using an equipment that comprises a spectrometer selected from an FTIR spectrometer or an FTNIR spectrometer. In a further embodiment, the spectrometer selected from an FTIR spectrometer, an FTNIR spectrometer, and further an FTNIR spectrometer.

In one embodiment, or a combination of embodiments described herein, the same type of spectrometer is used in the analysis of "the amount of the monomer and/or the amount of the comonomer" in the polymer solution downstream from the exit of the at least one reactor" and the analysis of "the amount of the monomer and/or the amount of the comonomer" in the process stream upstream from the entrance into the at least one reactor, and the analysis of "the amount of the monomer and/or the amount of the comonomer" in the recycled solvent stream; or wherein the same type of spectrometer is used in the analysis of "the amount of monomer and/or the amount of the comonomer" in the polymer solution downstream from the exit of the at least one reactor" and the analysis of "the amount of the monomer and/or the amount of the comonomer" in the recycled solvent stream."

In one embodiment, or a combination of embodiments described herein, the polymerization temperature is less than, or equal to, 200°C, preferably less than, or equal to, 190°C. In one embodiment, the polymerization temperature greater than 60°C, preferably greater than 80°C, and more preferably greater than 90°C. In one embodiment, the polymerization temperature greater than 100°C, preferably greater than 120°C, and more preferably greater than 140°C. In one embodiment, the polymerization temperature is from 60°C to 200°C, preferably from 80°C to 200°C, and more preferably from 100°C to 200°C, and even more preferably from 150°C to 200°C.

In one embodiment, or a combination of embodiments described herein, the polymerization temperature is greater than the highest melting point of the polymer, as determined by DSC.

In one embodiment, or a combination of embodiments described herein, the solution polymerization is run at a polymerization pressure from 400 psi to 1100 psi.

In one embodiment, or a combination of embodiments described herein, the polymerization pressure from 1.0 to 10.0 MPa, or from 1.5 to 8.0 MPa, or from 2.0 to 5.0 MPa.

In one embodiment, or a combination of embodiments described herein, the solution polymerization is run using a solvent that comprises at least one hydrocarbon.

In one embodiment, or a combination of embodiments described herein, the solution polymerization is run in the presence of at least one catalyst that is soluble in the solvent. In a further embodiment, the at least one catalyst is a single site catalyst.

In one embodiment, or a combination of embodiments described herein, the catalyst is selected from bis-metallocene catalysts, constrained geometry catalysts, and polyvalent aryloxyether compounds. In a further embodiment, the at least one catalysts is a polyvalent aryloxyether compound. In another embodiment, the at least one catalysts is a constrained geometry catalyst. We have also used Ziegler-Natta catalysts in combination with the above.

In one embodiment, or a combination of embodiments described herein, the polymerization comprises only one catalyst.

In one embodiment, or a combination of embodiments described herein, catalyst selection allows polymerization at a temperature up to 220°C.

In one embodiment, or a combination of embodiments described herein, the polymerization takes place in the presence of at least one catalyst that is soluble in the polymerization solvent. In a further embodiment, the polymerization solvent is one or more hydrocarbons. In a further embodiment, the catalyst preferably is not supported. The catalyst is completely soluble in the polymerization solvent.

In one embodiment, or a combination of embodiments described herein, the solution polymerization is run in one reactor.

In one embodiment, or a combination of embodiments described herein, the solution polymerization is run in two or more reactors, arranges in a series and/or parallel configuration.

In one embodiment, or a combination of embodiments described herein, the solution polymerization is run in two reactors. In a further embodiment, each reactor is a loop reactor.

In one embodiment, or a combination of embodiments described herein, the polymerization takes place in a reactor configuration selected from the group consisting of the following: (a) one reactor and (b) two or more reactors configured in series.

In one embodiment, or a combination of embodiments described herein, the polymer is an olefin-based polymer. In a further embodiment, the polymer is an ethylene-based polymer, and further an EPDM. In a further embodiment, the diene is 5-ethylidene-2-norbornene (ENB).

As discussed above, the invention provides a process for monitoring and/or adjusting a solution polymerization of an olefin-based polymer; for example, the process comprising monitoring the concentration of the monomer and/or comonomer in the solution polymerization using a process described herein.

In one embodiment, or a combination of embodiments described herein, the process monitors the concentration of monomer and/or comonomer in the reactor.

In one embodiment, or a combination of embodiments described herein, the process adjusts the concentration of monomer and/or comonomer in the reactor.

In one embodiment, or a combination of embodiments described herein, the process monitors and adjusts the concentration of monomer and/or comonomer in the reactor.

In one embodiment, or a combination of embodiments described herein, the spectrum is processed using a chemometric model to determine the concentration of the monomer and/or comonomer in the reactor, and/or and the amount of incorporation of one or more monomer types in the olefin-based polymer.

In one embodiment, or a combination of embodiments described herein, the concentration of the monomer and/or comonomer in the reactor, and/or the amount of monomer(s) incorporation is fed back to a process control system. In one embodiment, the control system monitors and/or adjusts monomer flow rate, catalyst flow rate, solvent flow rate, polymerization temperature, and polymerization pressure. Some examples of some polymer properties that can be influenced by controlling the process variables include density, melt index, molecular weight and molecular weight distribution.

The following embodiments apply to all the inventive aspects discussed above, as applicable.

In one embodiment, or a combination of embodiments described herein, the polymerization is not an ionic polymerization, for example, a cationic polymerization or an anionic polymerization.

In one embodiment, or a combination of embodiments described herein, the solution polymerization is a continuous polymerization.

In one embodiment, or a combination of embodiments described herein, the solution polymerization is a semi-batch polymerization.

The polymerization is not a slurry polymerization. Further, no particulate solids are formed in the polymerization reaction.

In a preferred embodiment, the polymerization does not comprise a fluorocarbon. In a preferred embodiment, the polymerization does not comprise a fluorohydrocarbon.

In a preferred embodiment, the polymerization does not comprise water.

In a preferred embodiment, the polymerization does not comprise a suspending agent or a dispersing agent. In a preferred embodiment, the polymerization does not comprise an emulsifier or a surfactant.

In a preferred embodiment, the polymerization does not comprise an ionic initiator.

In one embodiment, or a combination of embodiments described herein, a monomer is present in an amount $\leq 40$ wt%, or $\leq 30$ wt%, or $\leq 20$ wt%, based on the weight of the total weight of feed to the reactor. In one embodiment, or a combination of embodiments described herein, a monomer is present in an amount $\geq 0.1$ wt%, or $\geq 0.5$ wt%, or $\geq 1.0$ wt%, based on the weight of the total weight of feed to the reactor.

In one embodiment, or a combination of embodiments described herein, a comonomer is present in an amount $\leq 50$ wt%, $\leq 40$ wt%, or $\leq 30$ wt%, or $\leq 20$ wt%, based on the weight of the total weight of feed to the reactor. In one embodiment, or a combination of embodiments described herein, a comonomer is present in an amount $\geq 0.1$ wt%, or $\geq 0.5$ wt%, or $\geq 1.0$ wt%, based on the weight of the total weight of feed to the reactor.

In one embodiment, or a combination of embodiments described herein, the feed to the polymerization comprises from 10 to 30 wt% of monomer (for example, ethylene); from 5 to 35 wt% of a comonomer (for example, 1-octene); and 50 to 80 wt% of a polymerization solvent (for example, a hydrocarbon).

In one embodiment, or a combination of embodiments described herein, the polymer concentration, in the polymerization, is from 5 to 50 wt%, or from 20 to 60 wt%, based on the total weight of the polymer solution in the reactor.

An inventive process may comprise a combination of two or more embodiments as described herein. An inventive polymerization may comprise a combination of two or more embodiments as described herein. An inventive apparatus may comprise a combination of two or more combinations described herein.

The invention also provides a polymer formed from an inventive process. An inventive polymer may comprise a combination of two or more embodiments as described herein.

**Monomers/Polymers**

Monomers and comonomers include, but are not limited to, ethylenically unsaturated monomers, conjugated or nonconjugated dienes, polyenes, and combinations thereof. In a preferred embodiment, the monomer is ethylene.

In one embodiment, or a combination of embodiments described herein, the comononer is selected from the group consisting C3-C20 α-olefins, styrene, alkyl-substituted styrene, dienes, and naphthenics. In one embodiment, or a combination of embodiments described herein, the comonomer is selected from the group consisting of C3-C20 α-olefins, styrene, alkyl-substituted styrene and dienes. In one embodiment, or a combination of embodiments described herein, the comonomer is selected from the group consisting of C3-C20 α-olefins and dienes. In one embodiment, or a combination of embodiments described herein, the comonomer is selected from the group consisting of C3-C20 α-olefins, and further C3-C10 α-olefins.

In one embodiment, or a combination of embodiments described herein, the comonomer is an α-olefin selected from the group consisting of propylene, 1-butene, 1-hexene, and 1-octene. In one embodiment, or a combination of embodiments described herein, the comonomer is a diene.

In one embodiment, or a combination of embodiments described herein, the polymer comprises, in polymerized form, ethylene, propylene, and a diene, and preferably 5-ethylidene-2-norbornene (ENB).

In one embodiment, or a combination of embodiments described herein, the olefin-based polymer is an ethylene-based polymer or a propylene-based polymer. In one embodiment, or a combination of embodiments described herein, the olefin-based polymer is an ethylene-based polymer. In one embodiment, or a combination of embodiments described herein, the olefin-based polymer is a propylene-based polymer.

In one embodiment, or a combination of embodiments described herein, the polymer is an ethylene-based polymer. In a further embodiment, the ethylene-based polymer is an ethylene/α-olefin/diene terpolymer or an ethylene/α-olefin copolymer, and further an ethylene/α-olefin/diene terpolymer. In a further embodiment, the diene is 5-ethylidene-2-norbornene (ENB).

In one embodiment, or a combination of embodiments described herein, the polymer has a density from 0.86 to 0.92 g/cc.

An olefin-based polymer may comprise a combination of two or more embodiments described herein. An ethylene-based polymer may comprise a combination of two or more embodiments described herein. A propylene-based polymer may comprise a combination of two or more embodiments described herein.

*Ethylene/α-Olefin/Diene Interpolymers*

In one embodiment, or a combination of embodiments described herein, the polymer is an ethylene/α-olefin/diene interpolymer and further a terpolymer. The ethylene/α-olefin/diene interpolymers have polymerized therein C2 (ethylene), at least one α-olefin and a diene. Suitable examples of α-olefins include the C3-C20 α-olefins. Suitable examples of dienes include the C4-C40 non-conjugated dienes. The α-olefin is preferably a C3-C20 α-olefin, preferably a C3-C16 α-olefin, and more preferably a C3-C10 α-olefin. Preferred C3-C10 α-olefins are selected from the group consisting of propylene, 1-butene, 1-hexene and 1-octene, and more preferably propylene. In a preferred embodiment, the interpolymer is an EPDM. In a further embodiment, the diene is 5-ethylidene-2-norbornene (ENB).

In one embodiment, the diene is a C6-C15 straight chain, branched chain or cyclic hydrocarbon diene. Illustrative non-conjugated dienes are straight chain, acyclic dienes, such as 1,4-hexadiene and 1,5-heptadiene; branched chain, acyclic dienes, such as 5-methyl-1,4-hexadiene, 2-methyl-1,5-hexadiene, 6-methyl-1,5-heptadiene, 7-methyl-1,6-octadiene, 3,7-dimethyl-1,6-octadiene, 3,7-dimethyl-1,7-octadiene, 5,7-dimethyl-1,7-octadiene, 1,9-decadiene, and mixed isomers of dihydromyrcene; single ring alicyclic dienes, such as 1,4-cyclohexadiene, 1,5-cyclooctadiene and 1,5-cyclododecadiene; multi-ring alicyclic fused and bridged ring dienes, such as tetrahydroindene, methyl tetrahydroindene; alkenyl, alkylidene, cycloalkenyl and cycloalkylidene norbornenes, such as 5-methylene-2-norbornene (MNB), 5-ethylidene-2-norbornene (ENB), 5-vinyl-2-norbornene, 5-propenyl-2-norbornene, 5-isopropylidene-2-norbornene, 5-(4-cyclopentenyl)-2-norbornene, and 5-cyclohexylidene-2-norbornene. The diene is preferably a non-conjugated diene selected from ENB, dicyclopentadiene; 1,4-hexadiene; or 7-methyl-1,6-octadiene; and preferably ENB; dicyclopentadiene or 1,4-hexadiene; more preferably ENB or dicyclopentadiene; and even more preferably ENB.

In a preferred embodiment, the ethylene/α-olefin/diene interpolymer comprises a majority amount of polymerized ethylene, based on the weight of the interpolymer.

An ethylene/α-olefin/diene interpolymer or terpolymer may comprise a combination of two or more embodiments described herein.

*Ethylene/α-Olefin Interpolymers*

In one embodiment, or a combination of embodiments described herein, the polymer is an ethylene/α-olefin interpolymer and further a copolymer. Ethylene/α-olefin interpolymers include polymers formed by polymerizing ethylene with one or more, and preferably one, C3-C10 α-olefin(s). Illustrative α-olefins include propylene, 1-butene, 1-pentene, 1-hexene, 4-methyl-1-pentene, 1-heptene, 1-octene, 1-nonene and 1-decene. Preferably, the α-olefin is propylene, 1-butene, 1-hexene or 1-octene. Preferred copolymers include ethylene/propylene (EP) copolymers, ethylene/butene (EB) copolymers, ethylene/hexene (EH) copolymers, ethylene/octene (EO) copolymers.

An ethylene/α-olefin interpolymer or copolymer may comprise a combination of two or more embodiments as described herein.

*Propylene-based Polymers*

In one embodiment, or a combination of embodiments described herein, the polymer is a propylene-based polymer. In a further embodiment, the propylene-based polymer is a propylene/$\alpha$-olefin interpolymer, and preferably a copolymer, or a propylene/ethylene interpolymer, and preferably a copolymer.

Preferred comonomers include, but are not limited to, C2 and C4-C20 $\alpha$-olefins, and preferably C2 and C4-C10 $\alpha$-olefins. Comonomers include ethylene, 1-butene, 1-pentene, 1-hexene, 1-heptene and 1-octene, and more preferably include ethylene, 1-butene, 1-hexene and 1-octene, and even more preferably ethylene.

A propylene-based polymer may comprise a combination of two or more embodiments as described herein.

DEFINITIONS

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities can be incorporated into and/or within the polymer structure.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term "olefin-based polymer," as used herein, refers to a polymer that contains 50 wr% or a majority wt%, based on the weight of the polymer, polymerized olefin (for example, ethylene or propylene), and, optionally, one or more additional comonomers.

The term "ethylene-based polymer," as used herein, refers to a polymer that contains 50 wt% or a majority wt% polymerized ethylene (based on the weight of polymer), and, optionally, one or more additional comonomers.

The term "ethylene-based interpolymer," as used herein, refers to a polymer that contains 50 wt% or a majority wt% polymerized ethylene (based on the weight of interpolymer), and one or more additional comonomers.

The term "ethylene-based copolymer," as used herein, refers to a polymer that contains 50 wt% or a majority wt% polymerized ethylene (based on the weight of copolymer), and one comonomer, as the only monomer types.

The term "propylene-based polymer," as used herein, refers to a polymer that contains a majority wt% polymerized propylene (based on the weight of polymer), and, optionally, one or more additional comonomers.

The term "propylene-based interpolymer," as used herein, refers to a polymer that contains a majority wt% polymerized propylene (based on the weight of interpolymer), and one or more additional comonomers.

The term "propylene-based copolymer," as used herein, refers to a polymer that contains a majority wt% polymerized propylene (based on the weight of copolymer), and one comonomer, as the only monomer types.

The term "solvent," as used herein, refers to a substance (for example, a hydrocarbon (excluding monomer and comonomer)) that dissolves a species of interest, like a monomer and/or catalyst, resulting in a liquid phase.

The term "hydrocarbon," as used herein, refers to a chemical compound or molecule that contains only hydrogen and carbon atoms.

The term "solution polymerization," as used herein, refers to a polymerization process, in which the formed polymer is dissolved in the polymerization solvent.

The term "polymerization system," as used herein, refers to a mixture comprising monomers, solvent and catalyst, and which will undergo polymerization reaction under appropriate conditions.

The term "monomer type," as used herein, refers to the chemical structure and number of carbon atoms in a monomer.

The phrase "adjusting a solution polymerization," as used herein, refers to measuring one or more reactor conditions, and sending the measured information to a control system, which, in turn, sends out-put, to make the appropriate change(s) to one or more reactor condition(s) to level(s) within desired limits.

The phrase "monitoring a solution polymerization," as used herein, refers to measuring the reaction parameters, such as, for example, temperature, pressure and/or monomer concentration, in the reactor, to ensure that the measured parameters are within the desired limits.

The phrase "fed back," as used herein, refers to a process, where the data from one or more reactor condition(s) is/are sent to a process control system.

The term "process control system," as used herein, refers to a device/machine capable of receiving input from other devise(s)/machine(s), and which can use such input to change reactor conditions.

The phrase "real-time measurement," as used herein, refers to a measurement that takes place during the course a polymer production process. The frequency of the measurement is typically less than one minute, and substantially less than the time scale for a production run.

The term "densitometer," as used herein, refers to a device used to measure a solution density.

The term "on-line," as used herein, in reference to an analysis, refers to the connection of an analysis device directly to a polymer production process.

The term "off-line," as used herein, in reference to an analysis, refers to the location of an analysis device, removed from, and a not directly connected to, a polymer production process.

The term "upstream," as used herein, refers to a point in a polymerization process (for example, an apparatus or stream) that comes before a point of reference (for example, a reactor).

The term "downstream," as used herein, refers to a point in a polymerization process (for example, an apparatus or stream) that comes after a point of reference (for example, a reactor).

The term "process stream," as used herein, refers to composition comprising one or more reactants coming into a reactor, or a composition comprising polymer coming from a reactor.

The term "separator," as used herein, refer to a device used to separate a component, for example, polymer, from a polymer solution.

The term "fresh monomer," as used herein, refers to monomer obtain from a source outside of the polymerization flow back to the reactor - not a recycle.

The term "fresh comonomer," as used herein, refers to comonomer obtain from a source outside of the polymerization flow back to the reactor - not a recycle.

The term "reactor configuration," as used herein, refers to the reactor or reactors, and arrangement of such, used in the polymerization process.

The phrase "portion of the polymer solution," as used herein, refers to all, some, or any amount of the noted polymer solution.

The terms "comprising", "including", "having" and their derivatives are not intended to exclude the presence of any additional component, step or procedure, whether or not the same is specifically disclosed. In contrast, the term, "consisting essentially of" excludes from the scope of any succeeding recitation any other component, step or procedure, excepting those that are not essential to operability. The term "consisting of" excludes any component, step or procedure not specifically delineated or listed.

## TEST METHODS

*Molecular weight and Molecular Weight Distribution: GPC (Gel Permeation Chromatography)*

The chromatographic system consists of a PolymerChar GPC-IR (Valencia, Spain) high temperature GPC chromatograph, equipped with an internal IR5 infra-red detector (IR5). The autosampler oven compartment is set at 160°C, and the column compartment is set at 150°C. The columns used are 4 Agilent "Mixed A" 30 cm 20-micron linear mixed-bed columns, and a 20-um pre-column. The chromatographic solvent is 1,2,4 trichlorobenzene, which contains 200 ppm of butylated hydroxytoluene (BHT). The solvent source is nitrogen sparged. The injection volume used is 200 microliters and the flow rate is 1.0 milliliters/minute.

Calibration of the GPC column set is performed with 21 narrow molecular weight distribution polystyrene standards, with molecular weights ranging from 580 to 8,400,000 g/mol, and which are arranged in six "cocktail" mixtures, with at least a decade of separation between individual molecular weights. The standards are purchased from Agilent Technologies. The polystyrene standards are prepared at "0.025 grams in 50 milliliters of solvent" for molecular weights equal to, or greater than, 1,000,000 g/mol, and at "0.05 grams in 50 milliliters of solvent" for molecular weights less than 1,000,000 g/mol. The polystyrene standards are dissolved at 80°C, with gentle agitation, for 30 minutes. The polystyrene standard peak molecular weights are converted to ethylene-based polymer molecular weights, using Equation 6 (as described in Williams and Ward, J. Polym. Sci., Polym. Let., 6, 621 (1968)):

$$M_{polyethylene} = A \times (M_{polystyrene})^{B} \quad \text{(Equation 6)},$$

where M is the molecular weight, A has a value of 0.4315 and B is equal to 1.0.

A fifth order polynomial is used to fit the respective ethylene-based polymer -equivalent calibration points. A small adjustment to A (from approximately 0.415 to 0.44) is made to correct for column resolution and band-broadening effects, such that NIST standard NBS 1475 is obtained at a molecular weight of 52,000 g/mol.

The total plate count of the GPC column set is performed with EICOSANE (prepared at "0.04 g in 50 milliliters of TCB," and dissolved for 20 minutes with gentle agitation). The plate count (Equation 7) and symmetry (Equation 8) are measured on a 200 microliter injection according to the following equations:

$$Plate\ Count = 5.54 \times (\frac{RV_{Peak\ Max}}{Peak\ Width\ at\ half\ height})^2 \quad (Equation\ 7),$$

where RV is the retention volume in milliliters, the peak width is in milliliters, the peak max is the maximum height of the peak, and half height is one half of the height of the peak maximum;

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \quad (Equation\ 8),$$

where RV is the retention volume in milliliters, and the peak width is in milliliters, peak max is the maximum height of the peak, one tenth height is one tenth of the height of the peak maximum, and where rear peak refers to the peak tail at later retention volumes than the peak max, and where front peak refers to the peak front at earlier retention volumes than the peak max. The plate count for the chromatographic system should be greater than 22,000, and symmetry should be between 0.98 and 1.22.

Samples are prepared in a semi-automatic manner with the PolymerChar "Instrument Control" Software, wherein the samples are weight-targeted at 2 mg/ml, and the solvent (contained 200ppm BHT) is added to a pre nitrogen-sparged septa-capped vial, via the PolymerChar high temperature autosampler. The samples are dissolved for three hours at 160°C, under "low speed" shaking.

The calculations of $M_{n(GPC)}$, $M_{w(GPC)}$, and $M_{z(GPC)}$ are based on the GPC results, using the internal IR5 detector (measurement channel) of the PolymerChar GPC-IR chromatograph according to Equations 9-12, using PolymerChar GPCOne™ software, the baselinesubtracted IR chromatogram at each equally-spaced data collection point i ($IR_i$), and the ethylene-based polymer equivalent molecular weight obtained from the narrow standard calibration curve for the point i ($M_{polyethylene,i}$ in g/mol) from Equation 6. Subsequently, a GPC molecular weight distribution (GPC-MWD) plot ($wt_{GPC}$(lgMW) vs. lgMW plot, where $wt_{GPC}$(lgMW) is the weight fraction of ethylene-based polymer molecules with a molecular weight of lgMW) for the ethylene-based polymer sample can be obtained. Molecular weight is in g/mol and $wt_{GPC}$(lgMW) follows:

$$\int wt_{GPC}(\lg MW)d\lg MW = 1.00 \quad (Equation\ 9).$$

Number-average molecular weight $M_{n(GPC)}$, weight-average molecular weight $M_{w(GPC)}$ and z-average molecular weight $M_{z(GPC)}$ can be calculated as the following equations:

$$Mn_{(GPC)} = \frac{\sum^{i} IR_i}{\sum^{i}\left(\frac{IR_i}{M_{polyethylene,i}}\right)} \quad (Equation\ 10);$$

$$Mw_{(GPC)} = \frac{\sum^{i}\left(IR_i * M_{polyethylene,i}\right)}{\sum^{i} IR_i} \quad (Equation\ 11);$$

$$Mz_{(GPC)} = \frac{\sum^{i}\left(IR_i * M_{polyethylene,i}^{2}\right)}{\sum^{i}\left(IR_i * M_{polyethylene,i}\right)} \quad (Equation\ 12).$$

In order to monitor the deviations over time, a flow rate marker (decane) is introduced into each sample via a micropump controlled with the PolymerChar GPC-IR system. This flow rate marker (FM) is used to linearly correct the pump flow rate (Flowrate(nominal)) for each sample by RV alignment of the respective decane peak within the sample (RV(FM Sample)) to that of the decane peak within the narrow standards calibration (RV(FM Calibrated)). Any changes in the time of the decane marker peak are then assumed to be related to a linear-shift in flow rate (Flowrate(effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flow rate (with respect to the narrow standards calibration) is calculated as Equation 13. Processing of the flow marker peak is done via the PolymerChar GPCOne™ Software. Acceptable flow rate correction is such that the effective flowrate should be within 0.5% of the nominal flowrate.

$$\text{Flow rate}_{effective} = \text{Flow rate}_{nominal} \times (RV(FM_{calibrated})/RV(FM_{Sample})) \quad \text{(Equation 13)}.$$

*Density*

Density was measured in accordance with ASTM D 792. Test samples were prepared by compression molding according to ASTM D4703, Appendix A1, Procedure C.

*Melt Index*

Melt index ($I_2$, or MI) of an ethylene-based polymer is measured in accordance with ASTM D- 1238 at a temperature of 190°C and a load of 2.16 kg. Melt Flow Rate (MFR) of a propylene-based polymer is measured in accordance with ASTM D- 1238 at a temperature of 230°C and a load of 2.16 kg

*Example Method for Monitoring a Solution Polymerization*

A solution polymerization reactor feed stream(s), including recycle from separator downstream of reactor; fresh solvent, monomer, comonomer(s), hydrogen, catalyst(s), cocatalyst(s), were fed into a solution polymerization.

A reaction solution mixture comprised of solvent, monomer, comonomer(s), catalyst(s), cocatalyst(s), hydrogen, and polymer, was formed in the reaction zone (or reactor).

The outlet of reactor was sent to a recovery subsystem, to separate polymer product and recycle non-polymer content back to reactor.

A port of each of the reactor feed and the outlet stream were each contacted with a respective FTNIR probe to acquire spectroscopic signal.

The spectroscopic signals from each probe were analyzed using chemometric models to determine at least one property feature (for example, density).

The measured properties were incorporated into a process control model, and the flow of at least one feed stream (e.g. catalyst) or the ratio of feed streams (comonomer:monomer), based on the properties determined, were adjusted to achieve a target concentration of monomer and/or comonomer.

The properties of the polymer in the exit stream can also be measured for the following scenarios: use of multiple reactors, optional addition of chain shuttling agents to the reactor or feed stream, and/or use of multiple comonomers in each reactor (termonomers).

The type of spectrometer can be selected from the following: FTNIR or FTIR. Examples of monomer/comonomer = ethylene, propylene, butene, hexene, octene, dienes. Examples of solvents = ISOPAR E, SASOL, EXSOL, PETROSOL, SHELL.

**Reactor Feed or recycled solvent stream:**

Some examples of probe path lengths = 2 mm (PE, PP) or 5 mm (EPDM).
Examples of physical conditions: 1 - 60 C temperature, 1 - 1050 psig pressure.
Example of a monomer concentration permissible range = 0-40 wt%.
Example of a comonomer concentration permissible range = 0 - 60 wt%, (0-10% ENB)
Example of a monomer concentration best utility range = 0.3 - 20.0 wt%.
Example of a comonomer concentration best utility range = 0.3 - 30.0 wt%

**Reactor Exit stream:**

Example of a probe path length = 10 mm.
Examples of physical conditions: 25- 230°C temperature, 10 - 1050 psig pressure.
Example of a monomer concentration permissible range = 0 - 15 wt%.
Example of a comonomer concentration permissible range = 0 - 35 wt% (0 - 15 wt% for ENB).
Example of a monomer concentration best utility range = 0.3 - 7.0 wt%.
Example of a comonomer concentration best utility range = 0.3 - 30 wt%.
Examples of solvent = ISOPAR E, SASOL, EXSOL, PETROSOL, SHELL.
Example Accuracy = +/- 0.5 g/100 mL.
Useful chemometric approaches are partial least square regression (PLS) or classical least squares (CLS).

The monomer concentration in the reactor is determined using a regression analysis, which converts the Near-IR spectrum to the respective "weight per volume" of each component; and wherein each "weight per volume" is converted to a weight percentage of each component, and wherein each weight percentage is based on the total weight of the polymer solution. For the predictions of the Exit stream, the spectrum is corrected for temperature (match the temperature of the reactor).

The Near-Infrared fiber optic sensor is on-line with the reactor; with a transmission, not a reflective analysis. The fiber optic sensor can be located after reactor, but before a separator (separation of bulk solvent from polymer). The optic fiber can be located within a heat-trace equilibrated tubing.

EXPERIMENTAL

*Equipment*

A Near Infrared (NIR) spectrometer consists of a NIR light source, a NIR detector that converts NIR light to an electrical signal, an optical system, and, if necessary, a means to separate/isolate the NIR light of interest. The optical system is capable of directing NIR light to the probe (with sample), and returning the non-absorbed NIR light to the NIR detector. An example spectrometer is Applied Instrument Technologies (AIT) PCM 1000 FTNIR Process Analyzer, fitted with 600 um optical fibers.

A process interface device (probe or sensor) provides a means of directing the NIR light through the process sample (for example, polymerization reaction medium), at process temperatures and pressures required to keep the monomer, comonomers, polymers, and catalysts in solution. The probe also provides coupling connections for the NIR light to pass from the NIR light source, and to return to the NIR detector. An example is Hellma Axiom Analytical Technologies (Axiom) FPT-885SN-2 Process Transmission Probe with integral heat sleeve.

A Coriolis density meter rated for the temperature and pressure of the reaction product stream. An example is MICRO MOTION ELITE Coriolis DT150. Temperature is measured using a thermocouple located nearby (for example, within 15 feet from the densitometer - lines are temperature controlled).

*Solution Polymerization - General*

All raw materials (monomer and comonomer) and the process solvent (a narrow boiling range, high-purity isoparaffinic solvent) are purified before introduction into the reaction environment. Hydrogen is supplied in pressurized cylinders, as a high purity grade, and is not further purified. Reaction feed flows are typically measured with mass flow meters, and independently controlled with computer automated valve control systems or metering pumps. The fresh comonomer feed is mechanically pressurized, and can be injected into the process at several potential locations, depending on reactor configuration, which typically includes one of the following: only the feed stream for the first reactor, only the feed stream for the second reactor, or into a common stream prior to the solvent split to the two reactors. Reactor configuration options include, but are not limited to, single reactor operation, dual series reactor operation, or dual parallel reactor operation.

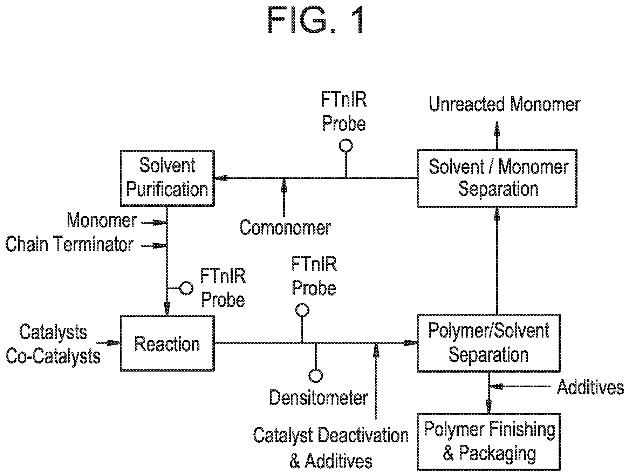

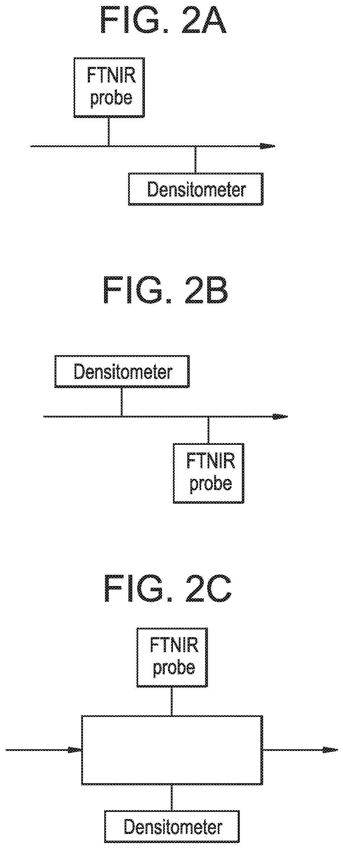

Reactors include loop reactors and continuous stirred tank reactors (CSTRs). In a dual series reactor configuration, the effluent from the first polymerization reactor (containing solvent, monomer, comonomer, hydrogen, catalyst components, and polymer) exits the first reactor loop, and is added to the second reactor loop, downstream of the second reactor lower pressure fresh feed injection. In a dual parallel reactor configuration, the effluent streams from the first and the second polymerization reactors are combined prior to any additional processing. In all reactor configurations, the final reactor effluent (second reactor effluent for dual series, the combined effluent for dual parallel, or the single reactor effluent) enters a zone, where it is deactivated with the addition of, and reaction with, a suitable reagent (typically water). At this same reactor exit location, other additives may also be added. The reactor effluent enters a devolatization system, where the polymer is removed from the non-polymer stream. The isolated polymer melt is pelletized and collected. Solvent and unreacted comonomer is typically recycled back to the reactor, after passing through a purification system. See Figure 1 and Figures 2A, 2B and 2C.

### *Example 1 - Overview*

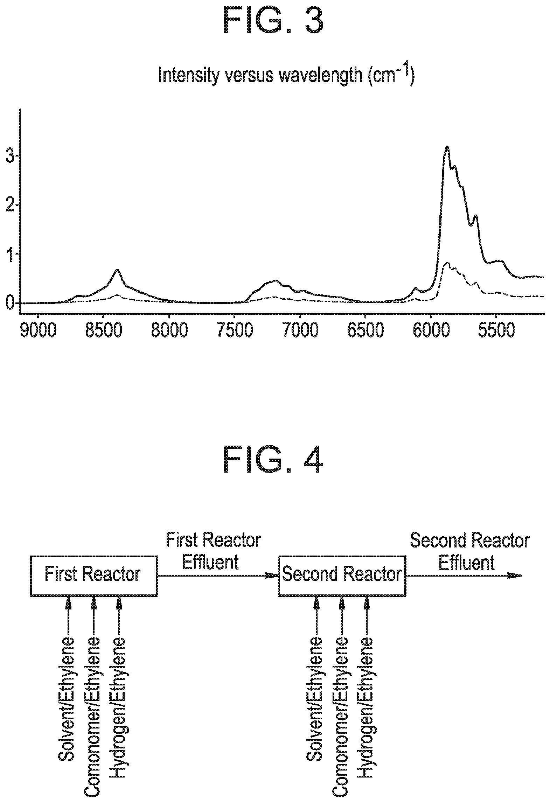

Ethylene-octene polymerization using two loop reactors, configured in series via a solution polymerization (polymerization pressure in each reactor approx. 725 psig). FTNIR probes are located in sample loops off the exit stream of each of the reactors, and also in the recycled solvent stream (after polymer is separated from the reaction solution). The FTNIR spectra are obtained at these three locations, essentially continuously during polymer production. See Figure 3 - Intensity versus wavelength ($cm^{-1}$) (Upper Blue Trace - Exit first reactor; Lower Green Trace - Recycle). The FTNIR probe is located after the densitometer (order is densitometer, thermocouple, then FTNIR probe in the reactor exit stream).

The entire NIR range can be used in the calibration models, but key information is in the ranges shown below in Table 1. Target properties for the polymer: MI = 0.85 g/10 min, density = 0.912 $g/cm^3$, Mw/Mn = 2.5.

Table 1 (FTNIR peaks)

| | |
|---|---|
| FEED C2C8 (feed of ethylene into reactor, feed octene into reactor) | 6080 to 6160 $cm^{-1}$ |
| EXIT C2C8 (reactor stream out of reactor - contains ethylene and octene) | 6080 to 6160 $cm^{-1}$ |
| RECYCLE C2C8 (recycled solvent stream - contains ethylene and octene) | 6070 to 6267 $cm^{-1}$ |

### *Chemometric Approach*

The FTNIR analyzer and much of the analytical method are run using AIT's analyzer control programs (for example, SpectraRTS). The chemometrics models are run by SOLO_PREDICTOR, available from Eigenvector Research Inc.. The FTNIR probe, densitometer, and thermocouple are located in close proximity to each other, in a sample loop downstream of each reactor, and in the recycle loop. More than one spectrum can be collected, and averaged.

### *Feed or Recycled Solvent Stream Model*

Spectra are collected at 4 $cm^{-1}$ resolution for the Feed and the Recycle. The spectra are pre-processed for any issues, resulting from the models being developed, using spectra from different spectrometers, other than the one running the model. There is an x-axis shift to correct for optics differences, and a path length difference correction. The spectra are also mean-centered, and a second-derivative is taken. The Feed and Recycle models use Partial Least Squares (PLS) chemometric technique (SOLO_PREDICTOR). The PLS model report concentration predictions in wt/wt.

### *Exit Stream Model*

Spectra are collected at 8 $cm^{-1}$ resolution. The Exit Stream model uses Classical Least Squares (CLS)/Densitometer method (SOLO_PREDICTOR). See further information below on the Exit Stream. The CLS model report concentration predictions in wt/vol.

### *Analysis Procedure*

The analysis procedure is as follows: (1) the thermocouple temperature is read (thermocouple is located in close proximity(within 15 feet) to the FTNIR probe), and FTNIR spectrum collected, (2) from the sample FTNIR spectrum, the temperature adjusted pure spectrum of each component (monomer or comonomer or polymer) is determined by interpolation of known pure spectra of the respective standards at known concentrations and at specified calibration temperatures, (3) the CLS (exit stream) model is applied, using inputs to software program: temperature, temperature adjusted pure spectra, sample spectrum, to predict the component concentrations in "wt/vol concentrations" for the exit stream. For the feed or recycle stream, the temperature corrections are not needed, and the PLS model predicts in "wt/wt" for the feed stream and the recycle stream, (4) for the exit stream only, each "wt/vol concentration" is divided by the measured density (wt/vol) from the online densitometer, to convert the concentrations to wt/wt.

*Example 1 - Feed Stream, Recycled Solvent Stream*

All raw materials (monomer and comonomer) and the process solvent (a narrow boiling range high-purity isoparaffinic solvent, ISOPAR-E) are purified with molecular sieves, before introduction into the reaction environment. Hydrogen is supplied pressurized, as a high purity grade, and is not further purified. The reactor monomer feed stream is pressurized to above reaction pressure. The solvent and comonomer feed is pressurized to above reaction pressure. The individual catalyst components are manually batch diluted with purified solvent, and pressurized to above reaction pressure. All reaction feed flows are measured with mass flow meters, and independently controlled with valve control systems. See, for example, Figure 4 for a generalized feed configuration.

A two reactor system is used in a series configuration. Each continuous solution polymerization reactor consists of a liquid full, non-adiabatic, isothermal, circulating, loop reactor, which mimics a continuously stirred tank reactor (CSTR) with heat removal. Independent control of all fresh solvent, monomer, comonomer, hydrogen, and catalyst component feeds is possible. The total fresh feed stream to the each reactor (solvent, monomer, comonomer, and hydrogen) is temperature controlled, to maintain a single solution phase, by passing the feed stream through a heat exchanger. The total fresh feed to each polymerization reactor is injected into the reactor at two locations, with approximately equal reactor volumes between each injection location. The fresh feed is controlled, with each injector receiving half of the total fresh feed mass flow. The catalyst components are injected into each polymerization reactor. The primary catalyst component feed is controlled to maintain each reactor monomer (ethylene) concentration. Reactor solution density is measured by a Coriolis flow meter. The cocatalyst components are fed based on calculated, specified molar ratios to the primary catalyst component. Immediately following each reactor feed injection location, the feed streams are mixed with the circulating polymerization reactor contents. The contents of each reactor are continuously circulated through heat exchangers.

The effluent from the first polymerization reactor (containing solvent, monomer, comonomer, hydrogen, catalyst components, and polymer) exits the first reactor loop, and is added to the second reactor loop. The final reactor effluent (second reactor effluent for dual series configuration) enters a zone, where it is deactivated with the addition of, and reaction with, a suitable reagent (i.e., water). At this same reactor exit location, other additives are added for polymer stabilization, for example, one or more antioxidants.

Following catalyst deactivation and additive addition, the reactor effluent enters a devolatization system, where the polymer is separated from the non-polymer stream. The isolated polymer melt is pelletized and collected. The non-polymer stream passes through various pieces of equipment, which separate most of the ethylene removed from the system. Most of the solvent and unreacted comonomer is recycled back to the reactor system. A small amount of solvent and comonomer is purged from the process. Catalyst information is shown in Table 2.

Table 2

| CAT (Catalyst) | Zirconium,dimethyl[[2,2‴-[1,3-propanediylbis(oxy-kO)]bis[3",5,5"-tris(1,1-dimethylethyl)-5'-methyl[1,1':3',1"-terphenyl]-2'-olato-$_K$O]](2-)] |
|---|---|
| COCAT 1 (co-catalyst 1) | Bis(hydrogenated tallow alkyl)methyl, tetrakis(pentafluorophenyl)borate(1-) amine |
| COCAT 2 (co-catalyst 2) | Modified methylalumoxane (MMAO) |

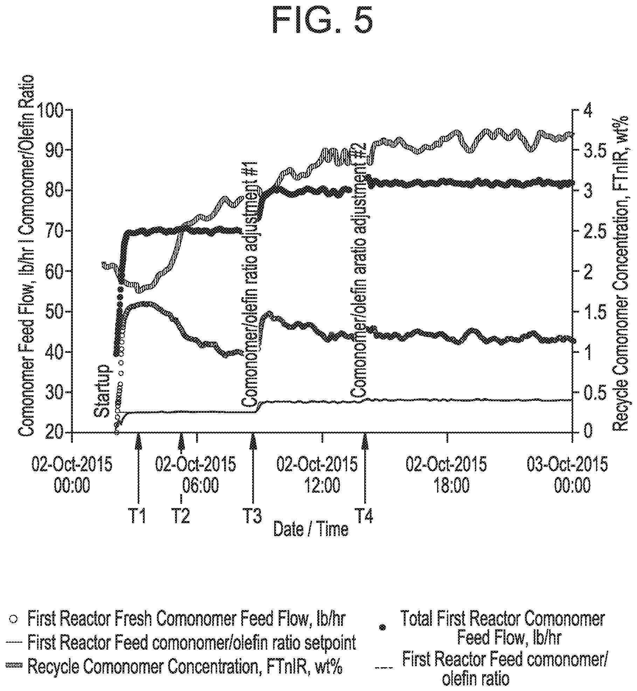

Tables 3a and 3b below, list reactor stream feed data flows. This data is graphically shown in Figure 5. In Figure 5, the order of profiles is as follows, as viewed from t1, the first (or lowest) line profile represents the "First Reactor Feed comonomer (C8) / olefin (C2 + C8) ratio;" the second heavy lined profile directly above the first (or lower) profile represents the "First Reactor Fresh Comonomer Feed Flow (lb/hr);" the third heavy lined profile directly above the second profile represents the "Total Reactor Comonomer Feed Flow (lb/hr);" the fourth heavy lined profile directly above the third profile represents the "Recycle Comonomer Concentration, FTnIR (wt/wt (wt of comonomer/wt of sample))."

The comonomer (octene) concentration (wt/wt) in the recycled solvent stream, measured by the FTnIR, is used by the process control computer to automatically adjust the fresh octene feed, such that the total comonomer feed and the "comonomer to olefin ratio" (see following definition) are maintained at the target levels. (See illustrative trend data for first reactor in the Figure 5 below).

*Comonomer to olefin ratio = (total comonomer feed flow to reactor) / (total comonomer + total ethylene feed flows to reactor) \*100*

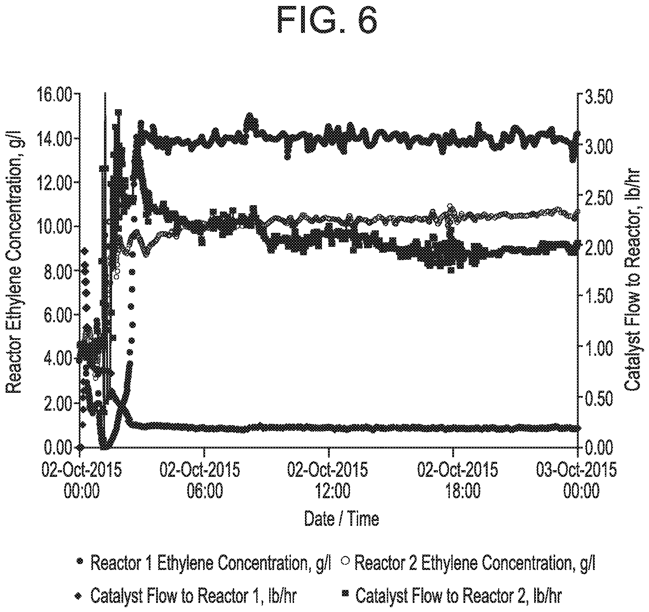

In this example the comonomer (octene) is only fed into the first reactor. The ethylene concentration in the recycled solvent stream, and the fresh ethylene feed rate to the first reactor, are constant throughout the polymerization. The concentration of comonomer in the recycled solvent stream (green line), however, changes significantly during the course of production. The measured concentration of comonomer in the recycled solvent stream (using the FTnIR) is used by the process control computer, to calculate the required feed rate of fresh octene, to feed into the reactor, to achieve the target "comonomer to olefin ratio" in the first reactor. The ethylene concentration in both reactors is controlled at target level by adjusting the respective catalyst flow target to the reactor as shown in Figure 6. Two time points were compared as an example, designated as t1 and t2. The recycled solvent stream FTnIR reports an octene concentration of 1.75 wt%, at time t1, corresponding to a required octene feed flow rate of 51.77 lb/h, to achieve a total octene feed flow rate (fresh + recycle) of 69.73 lb/h (versus the target of 70 lb/h). The actual "comonomer to olefin ratio" is 24.90 (versus the target of 24.90). At time t2, the concentration of octene in the recycle stream has increase to 2.51 wt%, and the fresh octene feed rate is adjusted down to 45.16 lb/h, which together with the recycle stream, yield a total octene feed rate of 70.82 lb/h (versus target of 70.0 lb/h). The "comonomer to olefin ratio" is 25.15 (versus target of 24.90). Periodically during the polymerization, the polymer density is measured according to ASTM D792, and slight adjustments made, if necessary, to the target "comonomer to olefin ratio" and the total comonomer feed flow (see times t3 and t4 in the Figure 5).

### *Example 1 - Exit Stream (after first reactor)*

The instrumentation are positioned in close proximity to each other, in the exit line leaving the reactor, in the sequence densitometer, thermocouple, and then FTNIR probe. Spectra are collected at 8 cm$^{-1}$ resolution for exit stream. It was determined that the Classical Least Squares (CLS)/Densitometer method provided better accuracy/precision, fewer standards, and a better density range. The CLS model approach is used to correlate spectral response to component concentration in units of mass per volume. The reported concentrations are then converted by the process control computer to mass/mass units, using solution density, as measured independently using densitometer (Chemometrics and Intelligent Laboratory Systems 45 _1999. 55-63), to correct for solution density in the exit stream. The densitometer approach also allows the use of the CLS method for densities outside the original range.

The Exit stream CLS model was developed using standards with known concentrations of the components of interest, dissolved in the polymerization solvent of choice (as determined gravimetrically). The components are ethylene, comonomer (e.g., octene), and polymer (standard ethylene/octene polymer with I2 = 0.8 g/10 min, density = 0.875 g/cc, MWD = 1.95, Mw = 114,000 g/mole). The exit stream calibration samples were prepared according to an experimental design covering the following ranges: 0-15 %wt for ethylene, 0-35 %wt for octene, and 0-40 %wt for polymer. Inclusion of a polymer term in the CLS model is necessary to obtain acceptable prediction errors (< 0.5 wt%) for ethylene and octene. The FTNIR spectra were obtained on the calibration standards at a range of temperatures (65°C to 230°C for the exit stream; and 5°C to 60°C for the feed and recycled solvent streams

Below are example data obtained during production of the ethylene/octene copolymer (target density of 0.912 g/cm$^3$, a target I2 of 0.85 g/10min, a target I10/I2 of 7.8, and a target Mw/Mn of 2.5). Average results over the polymerization campaign are given in Table 3a. Detailed data at two points in time during the polymerization are given in Table 3b, and a trend chart for key variables during the polymerization are shown in Figure 5 and Figure 6. Each wt% based on weight of stream of interest. Each vol% based on volume of stream of interest.

Table 3a (Average data over a production campaign)

| Reactor Configuration | Type | Dual Series |
|---|---|---|
| Comonomer type | Type | 1-octene |
| Recycled Solvent Temperature | °C | 40 |
| Recycled Solvent Ethylene Concentration by FTnIR calculated from output from FTNIR spectrum | wt% | 0.76 |
| Recycled Solvent 1-Octene Concentration by FTnIR - calculated from output from FTNIR spectrum | wt% | 3.68 |
| First Reactor Feed Solvent / Ethylene Mass Flow Ratio - input, reactor condition | g/g | 4.9 |
| First Reactor Feed Comonomer / Ethylene Mass Flow Ratio - input, reactor condition | g/g | 0.39 |
| First Reactor Feed Hydrogen / Ethylene Mass Flow Ratio - input, reactor condition | g/g | 1.8E-04 |
| First Reactor Polymerization Temperature - input, reactor condition | °C | 145 |

(continued)

| Reactor Configuration | Type | Dual Series |
|---|---|---|
| Comonomer type | Type | 1-octene |
| First Reactor Pressure - input, reactor condition | barg | 50 |
| First Reactor Ethylene Concentration by FTnIR at exit of first reactor - calculated from output from FTNIR spectrum | g/L | 14.0 |
| First Reactor Comonomer Concentration by FTnIR at exit of first reactor - - calculated from output from FTNIR spectrum | g/L | 24.3 |
| First Reactor Sample Line Temperature | °C | 152.8 |
| First Reactor Solution Density at the exit of the first reactor determined from output of densitometer | g/L | 629.9 |
| First Reactor Catalyst Type - input, reactor condition | Type | CAT |
| First Reactor Co-Catalyst 1 Type - input, reactor condition | Type | COCAT 1 |
| First Reactor Co-Catalyst 2 Type - input, reactor condition | Type | COCAT 2 |
| First Reactor Co-Catalyst 1 to Catalyst Molar Ratio (B to Zr ratio) input, reactor condition | Ratio | 1.6 |
| First Reactor Co-Catalyst 2 to Catalyst Molar Ratio (Al to Zr ratio) input, reactor condition | Ratio | 30.4 |
| Second Reactor Feed Solvent / Ethylene Mass Flow Ratio - input, reactor condition | g/g | 2.5 |
| Second Reactor Feed Comonomer / Ethylene Mass Flow Ratio - input, reactor condition | g/g | 0.096 |
| Second Reactor Feed Hydrogen / Ethylene Mass Flow Ratio input, reactor condition | g/g | 1.5E-04 |
| Second Reactor Polymerization Temperature - input, reactor condition | °C | 195 |
| Second Reactor Pressure - input, reactor condition | barg | 50 |
| Second Reactor Ethylene Concentration at exit of second reactor by FTnIR (this is the uncorrected/raw FTnIR value) - calculated from output from FTNIR spectrum | g/L | 9.7 |
| Second Reactor Comonomer Concentration at exit of second reactor by FTnIR - calculated from output from FTNIR spectrum | g/L | 7.6 |
| Second Reactor Sample Line Temperature | °C | 195.6 |
| Second Reactor Solution Density determined from output of densitometer | g/L | 603.4 |
| Second Reactor Co-Catalyst 1 to Catalyst Molar Ratio (B to Zr ratio) - input, reactor condition | mol/mol | 1.2 |
| Second Reactor Co-Catalyst 2 to Catalyst Molar Ratio (Al to Zr ratio) - input, reactor condition | mol/mol | 15.0 |

Table 3b (two points in time, t1 and t2)

| | | t1 | t2 |
|---|---|---|---|
| | | Dual Series | Dual Series |
| Reactor Configuration | Type | | |
| Comonomer type | Type | 1-octene | 1-octene |
| Recycled Solvent Temperature | °C | 37.31 | 40.33 |

(continued)

| Reactor Configuration | Type | t1 Dual Series | t2 Dual Series |
|---|---|---|---|
| Recycled Solvent Ethylene Concentration by FTnIR calculated from output from FTNIR spectrum | wt% | 0.60 | 0.70 |
| Recycled Solvent 1-Octene Concentration by FTnIR - calculated from output from FTNIR spectrum | wt% | 1.75 | 2.51 |
| Recycled Solvent Comonomer:Olefin ratio | % | 74.38 | 78.10 |
| First Reactor Polymerization Temperature - input, reactor condition | °C | 149.0 | 154.0 |
| First Reactor Fresh monomer flow | Lb/h | 201.45 | 201.27 |
| First Reactor Total monomer flow | Lb/h | 210.61 | 210.15 |
| First Reactor Fresh Comonomer flow | Lb/h | 51.77 | 45.16 |
| First Reactor Total Comonomer flow | Lb/h | 69.73 | 70.82 |
| First Reactor Ethylene Concentration by FTnIR at exit of first reactor - calculated from output from FTNIR spectrum | g/L | 2.29 | 13.45 |
| First Reactor Comonomer Concentration by FTnIR at exit of first reactor - - calculated from output from FTNIR spectrum | g/L | 12.88 | 20.11 |
| First Reactor Solution Density at the exit of the first reactor determined from output of densitometer | g/L | 645.2 | 627.9 |
| First Reactor Comonomer:Olefin ratio (actual) | % | 24.90 | 25.15 |
| First Reactor Comonomer:Olefin ratio (set point) | % | 24.90 | 24.90 |
| Second Reactor Polymerization Temperature - input, reactor condition | °C | 195.2 | 195.1 |
| Second Reactor Fresh monomer flow | Lb/h | 139.64 | 139.92 |
| Second Reactor Total monomer flow | Lb/h | 142.81 | 143.03 |
| Second Reactor Fresh Comonomer flow | Lb/h | 0 | 0 |
| Second Reactor Total Comonomer flow | Lb/h | 6.48 | 9.23 |
| Second Reactor Ethylene Concentration at exit of second reactor by FTnIR (this is the uncorrected/raw FTnIR value) | g/L | 8.8 | 9.6 |
| Second Reactor Comonomer Concentration at exit of second reactor by FTnIR - calculated from output from FTNIR spectrum | g/L | 0.0 | 4.4 |
| Second Reactor Solution Density determined from output of densitometer | g/L | 604.7 | 603.1 |

As shown above the inventive process can be used to obtain real-time measurements of the monomer and comonomer concentration in process streams of a solution polymerization, both before and after a reactor(s), using on-line FTNIR probes. The measured concentrations are used to determine reactor conversion, and are used to make adjustments in feed rates (monomer/comonomer/solvent/catalyst) into the reactor, to minimize off-grade polymer, during product transitions, and to ensure that the polymer produced meets the targeted quality properties, by maintaining tight and consistent control of the reactor(s) during the polymerization process.

**Claims**

1. A process to obtain a real-time measurement of a monomer concentration and/or a real-time measurement of a comonomer concentration in at least one process stream of a solution polymerization to form a polymer, said process comprising analyzing the amount of the monomer and/or the amount of the comonomer in a polymer solution downstream from the exit of at least one reactor, using at least one fiber optic sensor coupled to a light source, or using at least one flow cell coupled to a light source, and wherein the light source is connected to a spectrometer; and wherein at least one of the following takes place:

A) a portion of the polymer solution exits the reactor, and then comes into contact with the fiber optic sensor or the flow cell, and a spectrum is generated, and then the solution flows through a densitometer; or

B) a portion of the polymer solution exits the reactor, and then flows through a densitometer, and then the solution comes into contact with the fiber optic sensor or the flow cell, and a spectrum is generated; or

C) a portion of the polymer solution exits the reactor, and is split into at least two streams, and wherein one stream flows through a densitometer, and wherein another stream comes into contact with the fiber optic sensor or flow cell, and a spectrum is generated; and wherein the process further comprises analyzing the amount of a monomer and/or the amount of a comonomer, in a recycled solvent stream, using at least one fiber optic sensor coupled to a light source, or using at least one flow cell coupled to a light source; and wherein this recycled solvent stream is downstream from a "solvent/monomer separator" and upstream from the injection of the monomer and/or the comonomer into a process stream fed to the at least one reactor.

2. The process of claim 1, wherein the "polymer solution downstream from the exit of at least one reactor," which is analyzed, comprises from 6 to 50 wt% of the polymer, based on the weight of the polymer solution.

3. The process of claim 1 or claim 2, wherein the densitometer is upstream from a separator.

4. The process of claim 3, wherein the fiber optic sensor or the flow cell is upstream from the separator.

5. The process of any one of the previous claims, wherein the analysis of "the amount of monomer and/or comonomer in the polymer solution downstream from the exit of the at least one reactor" is performed using an equipment that comprises a spectrometer selected from an FTIR spectrometer or an FTNIR spectrometer.

6. The process of any one of the previous claims, further comprising analyzing the amount of a monomer and/or the amount of a comonomer in a process stream, upstream from the entrance into the at least one reactor, using at least one fiber optic sensor coupled to a light source, or using at least one flow cell coupled to a light source; and wherein "the amount of the monomer and/or the amount of the comonomer" in this process stream derives from fresh monomer and/or fresh comonomer, respectively, and optionally from recycled monomer and/or recycled comonomer, respectively.

7. The process of any one of the previous claims, wherein the polymer is an olefin-based polymer.

8. A solution polymerization process to form a polymer, said process comprising at least the following steps:

a) feeding monomer, solvent, and comonomer(s) to at least one reactor;

b) dissolving monomer, and comonomer(s), in the solvent, to form a solution;

c) polymerizing the monomer and comonomer to form the polymer; and

d) measuring one or more of monomer concentration and comonomer concentration, using the process of any one of the previous claims;

e) sending the measured information to a control system, and

f) adjusting reactor conditions via the control system if one or more of monomer concentration and comonomer concentration deviate from desired limits.

9. The solution polymerization process of claim 8, wherein monomer flow rate, comonomer flow rate, or both are adjusted if measured comonomer to monomer ratio deviates from comonomer to monomer ratio target.

10. A polymerization apparatus comprising at least the following:

i) at least one reactor;

ii) at least one fiber optic sensor coupled to a light source, or at least one flow cell coupled to a light source;

iii) at least one densitometer;

iv) at least one spectrometer connected to the light source

v) a solvent/monomer separator; and

wherein (a) at least one fiber optic sensor coupled to a light source or at least one flow cell coupled to a light source and at least one spectrometer connected to the light source are located downstream from an exit of at least one reactor and (b) wherein at least one densitometer is located downstream from the at least one fiber optic sensor coupled to a light source or the at least one flow cell coupled to a light source and the at least one spectrometer connected to the light source, and wherein (a) and (b) are in a series configuration, a portion of the polymer solution exits the reactor, then comes into contact with the fiber optic sensor or the flow cell, and a spectrum is generated, and then the solution flows through a densitometer or

wherein (a1) at least one densitometer is located downstream from an exit of at least one reactor and (b1) wherein at least one fiber optic sensor coupled to a light source or at least one flow cell coupled to a light source and at least one spectrometer connected to the light source is located downstream from the at least one densitometer, and wherein (a1) and (b1) are in a series configuration; a portion of the polymer solution exits the reactor, then flows through a densitometer, and then the solution comes into contact with the fiber optic sensor or the flow cell, and a spectrum is generated, or

wherein (a2) at least one fiber optic sensor coupled to a light source or at least one flow cell coupled to a light source and at least one spectrometer connected to the light source and (b2) a densitometer, are located downstream from an exit of at least one reactor, and wherein (a2) and (b2) are in a parallel configuration; a portion of the polymer solution exits the reactor, and is split onto at least two streams, and wherein one stream flows through a densitometer, and wherein another stream comes into contact with the fiber optic sensor or flow cell, and a spectrum is generated.

and wherein at least one fiber optic sensor coupled to a light source or at least one flow cell coupled to a light source is located downstream from a solvent/monomer separator and located upstream from the location where injection of monomer and/or comonomer into a process stream fed to the at least one reactor takes place.

## Patentansprüche

1. Verfahren zum Erhalten einer Echtzeitmessung einer Monomerkonzentration und/oder einer Echtzeitmessung einer Comonomerkonzentration in mindestens einem Verfahrensstrom einer Lösungspolymerisation, um ein Polymer auszubilden, das Verfahren umfassend ein Analysieren der Menge des Monomers und/oder der Menge des Comonomers in einer Polymerlösung stromabwärts von dem Ausgang von mindestens einem Reaktor, unter Verwendung von mindestens einem faseroptischen Sensor, der mit einer Lichtquelle gekoppelt ist, oder unter Verwendung mindestens einer Durchflussküvette, die mit einer Lichtquelle gekoppelt ist, und wobei die Lichtquelle mit einem Spektrometer verbunden ist; und wobei mindestens eines von Folgendem stattfindet:

   A) ein Teil der Polymerlösung tritt aus dem Reaktor aus und kommt dann mit dem faseroptischen Sensor oder der Durchflussküvette in Kontakt, und ein Spektrum wird erzeugt, und dann fließt die Lösung durch einen Dichtemesser; oder

   B) ein Teil der Polymerlösung tritt aus dem Reaktor aus und fließt dann durch einen Dichtemesser, und dann kommt die Lösung mit dem faseroptischen Sensor oder der Durchflussküvette in Kontakt, und ein Spektrum wird erzeugt; oder

   C) ein Teil der Polymerlösung tritt aus dem Reaktor aus und wird in mindestens zwei Ströme aufgeteilt, und wobei ein Strom durch einen Dichtemesser fließt, und wobei ein anderer Strom mit dem faseroptischen Sensor oder der Durchflussküvette in Kontakt kommt und ein Spektrum erzeugt wird; und wobei das Verfahren ferner das Analysieren der Menge eines Monomers und/oder der Menge eines Comonomers in einem rückgeführten Lösungsmittelstrom, unter Verwendung mindestens eines faseroptischen Sensors, der mit einer Lichtquelle gekoppelt ist, oder unter Verwendung mindestens einer Durchflussküvette, die mit einer Lichtquelle gekoppelt ist, umfasst; und wobei dieser rückgeführte Lösungsmittelstrom stromabwärts von einem "Lösungsmittel/Monomerabscheider" und stromaufwärts von der Injektion des Monomers und/oder des Comonomers in einen Verfahrensstrom, der dem Reaktor zugeführt wird, ist.

2. Verfahren nach Anspruch 1, wobei die "Polymerlösung stromabwärts des Ausgangs von mindestens einem Reaktor", die analysiert wird, von 6 bis 50 Gew.-% des Polymers, bezogen auf das Gewicht der Polymerlösung, umfasst.

3. Verfahren nach Anspruch 1 oder 2, wobei der Dichtemesser stomaufwärts von dem Abscheider ist.

4. Verfahren nach Anspruch 3, wobei der faseroptische Sensor oder die Durchflussküvette stromaufwärts von dem Abscheider ist.

5. Verfahren nach einem der vorstehenden Ansprüche, wobei die Analyse von "der Menge von Monomer und/oder Comonomer in der Polymerlösung stromabwärts von dem Ausgang von dem mindestens einen Reaktor" unter Verwendung einer Ausrüstung durchgeführt wird, die ein Spektrometer umfasst, das aus einem FTIR-Spektrometer oder einem FTNIR-Spektrometer ausgewählt ist.

6. Verfahren nach einem der vorstehenden Ansprüche, ferner umfassend das Analysieren der Menge eines Monomers und/oder der Menge eines Comonomers in einem Verfahrensstrom, stromaufwärts von dem Eingang in den mindestens einen Reaktor, unter Verwendung mindestens eines faseroptischen Sensors, der mit einer Lichtquelle gekoppelt ist, oder unter Verwendung mindestens einer Durchflussküvette, die mit einer Lichtquelle gekoppelt ist; und wobei "die Menge des Monomers und/oder die Menge des Comonomers" in diesem Verfahrensstrom aus frischem Monomer beziehungsweise frischem Comonomer und optional aus rückgeführtem Monomer beziehungsweise rückgeführtem Comonomer stammt.

7. Zusammensetzung nach einem der vorstehenden Ansprüche, wobei das Polymer ein olefinbasiertes Polymer ist.

8. Lösungspolymerisierungsverfahren, um ein Polymer auszubilden, das Verfahren umfassend mindestens die folgenden Schritte:

   a) Zuführen von Monomer, einem Lösungsmittel und Comonomer (en) zu mindestens einem Reaktor;
   b) Auflösen von Monomer und Comonomer (en) in dem Lösungsmittel, um eine Lösung auszubilden;
   c) Polymerisieren des Monomers und des Comonomers, um das Polymer auszubilden; und
   d) Messen eines oder mehrerer von Monomerkonzentration und Comonomerkonzentration, unter Verwendung des Verfahrens nach einem der vorstehenden Ansprüche;
   e) Senden der gemessenen Informationen an ein Steuersystem, und
   f) Einstellen der Reaktorbedingungen über das Steuersystem, falls eine oder mehrere von Monomerkonzentration und Comonomerkonzentration von gewünschten Grenzen abweichen.

9. Lösungspolymerisationsverfahren nach Anspruch 8, wobei die Monomerflussrate, die Comonomerflussrate oder beide eingestellt werden, falls das gemessene Comonomer-zu-Monomer-Verhältnis von dem Comonomer-zu-Monomer-Zielverhältnis abweicht.

10. Polymerisationseinrichtung, umfassend mindestens das Folgende:

   i) mindestens einen Reaktor;
   ii) mindestens einen faseroptischen Sensor, der mit einer Lichtquelle gekoppelt ist, oder mindestens eine Durchflussküvette, die mit einer Lichtquelle gekoppelt ist;
   iii) mindestens einen Dichtemesser;
   iv) mindestens ein Spektrometer, das mit der Lichtquelle verbunden ist
   v) einen Lösungsmittel-/Monomerabscheider; und
   wobei (a) sich mindestens ein faseroptischer Sensor, der mit einer Lichtquelle oder mindestens einer Durchflussküvette gekoppelt ist, die mit einer Lichtquelle gekoppelt ist, und mindestens ein Spektrometer, das mit der Lichtquelle verbunden ist, stromabwärts von einem Ausgang von mindestens einem Reaktor befinden, und (b) wobei sich mindestens ein Dichtemesser stromabwärts von dem mindestens einen faseroptischen Sensor, der mit einer Lichtquelle gekoppelt ist, oder der mindestens einen Durchflussküvette, die mit einer Lichtquelle gekoppelt ist, und dem mindestens eine Spektrometer, das mit einer Lichtquelle verbunden ist, befindet, und wobei (a) und (b) in einer Serienkonfiguration sind, ein Teil der Polymerlösung aus dem Reaktor austritt, und dann mit dem faseroptischen Sensor oder der Durchflussküvette in Kontakt kommt, und ein Spektrum erzeugt wird, und dann die Lösung durch einen Dichtemesser fließt, oder wobei (a1) sich mindestens ein Dichtemesser stromabwärts von einem Ausgang von mindestens einem Reaktor befindet, und (b1) wobei sich mindestens ein faseroptischer Sensor, der mit einer Lichtquelle gekoppelt ist, oder mindestens eine Durchflussküvette, die mit einer Lichtquelle gekoppelt ist, und mindestens ein Spektrometer, das mit der Lichtquelle verbunden ist, stromabwärts von dem mindestens einem Dichtemesser befinden, und wobei (a1) und (b1) in einer Serienkonfiguration sind; ein Teil der Polymerlösung aus dem Reaktor austritt, dann durch einen Dichtemesser fließt, und dann die Lösung mit dem faseroptischen Sensor oder der Durchflussküvette in Kontakt kommt und ein Spektrum erzeugt wird, oder wobei (a2) sich mindestens ein faseroptischer Sensor, der mit einer Lichtquelle gekoppelt ist, oder mindestens eine Durchflussküvette, die mit einer Lichtquelle gekoppelt ist, und mindestens ein Spektrometer, das mit der Lichtquelle verbunden ist, und (b2) ein Dichtemesser stromabwärts von einem Ausgang von mindestens einem Reaktor befinden, und wobei (a2) und (b2) in einer parallelen Konfiguration sind; ein Teil der Polymerlösung aus dem Reaktor austritt und in mindestens zwei Ströme aufgeteilt wird, und wobei ein Strom durch ein Dichtemesser fließt, und wobei ein anderer Strom mit dem faseroptischen Sensor oder der Durchflussküvette in Kontakt kommt und ein Spektrum erzeugt wird.

und wobei sich mindestens ein faseroptischer Sensor, der mit einer Lichtquelle gekoppelt ist, oder mindestens eine Durchflussküvette, die mit einer Lichtquelle gekoppelt ist, stromabwärts von einem Lösungsmittel-/Monomerabscheider befinden, und stromaufwärts von dem Ort befinden, in dem die Injektion von Monomer und/oder Comonomer in einen Verfahrensstrom, der dem Reaktor zugeführt wird, stattfindet.

**Revendications**

1. Procédé d'obtentention d'une mesure en temps réel d'une concentration en monomère et/ou une mesure en temps réel d'une concentration en comonomère dans au moins un courant de procédé d'une polymérisation en solution pour former un polymère, ledit procédé comprenant l'analyse de la quantité du monomère et/ou de la quantité du comonomère dans une solution de polymère en aval de la sortie d'au moins un réacteur, à l'aide d'au moins un capteur à fibre optique couplé à une source de lumière, ou à l'aide d'au moins une cellule d'écoulement couplée à une source de lumière, et dans lequel la source de lumière est connectée à un spectromètre ; et dans lequel au moins un de ce qui suit se déroule :

   A) une partie de la solution de polymère quitte le réacteur, puis vient en contact avec le capteur à fibre optique ou la cellule d'écoulement, et un spectre est généré, puis la solution s'écoule à travers un densitomètre ; ou
   B) une partie de la solution de polymère quitte le réacteur, puis s'écoule à travers un densitomètre, puis la solution vient en contact avec le capteur à fibre optique ou la cellule d'écoulement, et un spectre est généré ; ou
   C) une partie de la solution de polymère quitte le réacteur, et est divisée en au moins deux courants, et dans lequel un courant s'écoule à travers un densitomètre, et dans lequel un autre courant vient en contact avec le capteur à fibre optique ou la cellule d'écoulement, et un spectre est généré ; et dans lequel le procédé comprend en outre l'analyse de la quantité d'un monomère et/ou de la quantité d'un comonomère, dans un courant de solvant recyclé, à l'aide d'au moins un capteur à fibre optique couplé à une source de lumière, ou à l'aide d'au moins une cellule d'écoulement couplée à une source de lumière ; et dans lequel ce courant de solvant recyclé est en aval d'un « séparateur solvant/monomère » et en amont de l'injection du monomère et/ou du comonomère dans un courant de procédé alimenté à l'au moins un réacteur.

2. Procédé selon la revendication 1, dans lequel la « solution de polymère en aval de la sortie d'au moins un réacteur », qui est analysée, comprend de 6 à 50 % en poids du polymère, sur la base du poids de la solution de polymère.

3. Procédé selon la revendication 1 ou la revendication 2, dans lequel le densitomètre est en amont d'un séparateur.

4. Procédé selon la revendication 3, dans lequel le capteur à fibre optique ou la cellule d'écoulement est en amont du séparateur.

5. Procédé selon l'une quelconque des revendications précédentes, dans lequel l'analyse de « la quantité de monomère et/ou de comonomère dans la solution de polymère en aval de la sortie de l'au moins un réacteur » est mise en oeuvre à l'aide d'un équipement qui comprend un spectromètre choisi parmi un spectromètre FTIR ou un spectromètre FTNIR.

6. Procédé selon l'une quelconque des revendications précédentes, comprenant en outre l'analyse de la quantité d'un monomère et/ou de la quantité d'un comonomère dans un courant de procédé, en amont de l'entrée vers l'au moins un réacteur, à l'aide d'au moins un capteur à fibre optique couplé à une source de lumière, ou à l'aide d'au moins une cellule d'écoulement couplée à une source de lumière ; et dans lequel « la quantité du monomère et/ou la quantité du comonomère » dans ce courant de procédé dérive de monomère frais et/ou de comonomère frais, respectivement, et facultativement de monomère recyclé et/ou de comonomère recyclé, respectivement.

7. Procédé selon l'une quelconque des revendications précédentes, dans lequel le polymère est un polymère à base d'oléfine.

8. Procédé de polymérisation en solution pour former un polymère, ledit procédé comprenant au moins les étapes suivantes :

a) alimentation de monomère, solvant, et comonomère(s) vers au moins un réacteur ;

b) dissolution du monomère, et du ou des comonomère(s), dans le solvant, pour former une solution ;

c) polymérisation du monomère et du comonomère pour former le polymère ; et

d) mesure d'une ou plusieurs d'une concentration en monomère et d'une concentration en comonomère, à l'aide du procédé selon l'une quelconque des revendications précédentes ;

e) envoi des informations mesurées à un système de commande, et

f) ajustement de conditions de réacteur par l'intermédiaire du système de commande si une ou plusieurs de la concentration en monomère et de la concentration en comonomère dévient par rapport à des limites souhaitées.

9. Procédé de polymérisation en solution selon la revendication 8, dans lequel le débit de monomère, le débit de comonomère, ou l'un et l'autre sont ajustés si le rapport mesuré du comonomère au monomère dévie d'une cible de rapport du comonomère au monomère.

10. Appareil de polymérisation comprenant au moins ce qui suit :

i) au moins un réacteur ;

ii) au moins un capteur à fibre optique couplé à une source de lumière, ou au moins une cellule d'écoulement couplée à une source de lumière ;

iii) au moins un densitomètre ;

iv) au moins un spectromètre connecté à la source de lumière

v) un séparateur solvant/monomère ; et

dans lequel (a) au moins un capteur à fibre optique couplé à une source de lumière ou au moins une cellule d'écoulement couplée à une source de lumière et au moins un spectromètre connecté à la source de lumière sont localisés en aval d'une sortie d'au moins un réacteur et (b) dans lequel au moins un densitomètre est localisé en aval de l'au moins un capteur à fibre optique couplé à une source de lumière ou de l'au moins une cellule d'écoulement couplée à une source de lumière et de l'au moins un spectromètre connecté à la source de lumière, et dans lequel (a) et (b) sont dans une configuration en série, une partie de la solution de polymère quitte le réacteur, puis vient en contact avec le capteur à fibre optique ou la cellule d'écoulement, et un spectre est généré, puis la solution s'écoule à travers un densitomètre ou

dans lequel (a1) au moins un densitomètre est localisé en aval d'une sortie d'au moins un réacteur et (b1) dans lequel au moins un capteur à fibre optique couplé à une source de lumière ou au moins une cellule d'écoulement couplée à une source de lumière et au moins un spectromètre connecté à la source de lumière est localisé en aval de l'au moins un densitomètre, et dans lequel (a1) et (b1) sont dans une configuration en série ; une partie de la solution de polymère quitte le réacteur, puis s'écoule à travers un densitomètre, puis la solution vient en contact avec le capteur à fibre optique ou la cellule d'écoulement, et un spectre est généré, ou

dans lequel (a2) au moins un capteur à fibre optique couplé à une source de lumière ou au moins une cellule d'écoulement couplée à une source de lumière et au moins un spectromètre connecté à la source de lumière et (b2) un densitomètre, sont localisés en aval de la sortie d'au moins un réacteur, et dans lequel (a2) et (b2) sont dans une configuration en parallèle ; une partie de la solution de polymère quitte le réacteur, et est divisée en au moins deux courants, et dans lequel un courant s'écoule à travers un densitomètre, et dans lequel un autre courant vient en contact avec le capteur à fibre optique ou la cellule d'écoulement, et un spectre est généré. et dans lequel au moins un capteur à fibre optique couplé à une source de lumière ou au moins une cellule d'écoulement couplée à une source de lumière est localisé en aval d'un séparateur solvant/monomère et localisé en amont de la localisation où une injection de monomère et/ou de comonomère dans un courant de procédé alimenté à l'au moins un réacteur se déroule.

# FIG. 1

# FIG. 2A

FTNIR probe

Densitometer

# FIG. 2B

Densitometer

FTNIR probe

# FIG. 2C

FTNIR probe

Densitometer

EP 3 774 022 B1

# FIG. 3

Intensity versus wavelength (cm$^{-1}$)

# FIG. 4

26

# FIG. 5

○ First Reactor Fresh Comonomer Feed Flow, lb/hr     ● Total First Reactor Comonomer
— First Reactor Feed comonomer/olefin ratio setpoint          Feed Flow, lb/hr
═ Recycle Comonomer Concentration, FTnIR, wt%    --- First Reactor Feed comonomer/
                                                      olefin ratio

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5151474 A
- WO 9829787 A
- US 6723804 B
- US 7400941 B
- US 7315369 B
- US 7417095 B
- US 7433761 B
- US 7751941 B
- US 6864331 B
- US 7505127 B
- US 7505129 B

- US 7483129 B
- US 7106437 B
- US 7116414 B
- US 6479597 B
- EP 1214363 A
- EP 2244461 A
- US 6072576 A
- US 8843324 B
- US 5155184 A
- US 20060116835 A

**Non-patent literature cited in the description**

- *Applied Spectroscopy,* 1997, vol. 51 (10), 1565-1572
- **M.B. SEASHOLTZ.** *Making Money with Chemometrics,* 1997
- On-Line Monitoring of Chemical Reactions. **WOLF-DIETER HERGETH.** Ullmann's Encyclopedia of Industrial Chemistry. Wiley-VCH Verlag GmbH & Co, 2012

- Process Analytical Technology: Spectroscopic Tools and Implementation Strategies for the Chemical and Pharmaceutical Industries. John Wiley & Sons, 2010
- **WILLIAMS ; WARD.** *J. Polym. Sci., Polym. Let.,* 1968, vol. 6, 621
- *Chemometrics and Intelligent Laboratory Systems,* 1999, vol. 45, 55-63